# EUROPÄISCHE PATENTSCHRIFT

(11) **EP 1 536 961 B1**
(45) Veröffentlichungstag und Bekanntmachung des Hinweises auf die Patenterteilung: **06.09.2006**
(21) Anmeldenummer: 03794808.0
(22) Anmeldetag: 02.09.2003
(51) Int. Cl.: B60H 1/02, B60H 1/08, B60H 1/00

(54) **SYSTEM UND VERFAHREN ZUR REGULIERUNG DES WÄRMEHAUSHALTS EINES FAHRZEUGS**
SYSTEM AND METHOD FOR REGULATING THE HEAT MANAGEMENT OF A VEHICLE
SYSTEME ET PROCEDE DE REGULATION DE L'ETAT THERMIQUE D'UN VEHICULE

(30) Priorität: 04.09.2002 DE 10240712
(43) Veröffentlichungstag der Anmeldung: 08.06.2005
(73) Patentinhaber: ROBERT BOSCH GMBH, 70442 Stuttgart (DE)
(72) Erfinder: HORSTMANN, Peter, 71229 Leonberg (DE); SATZGER, Peter, 70825 Korntal (DE); KANTERS, Petra, 70197 Stuttgart (DE); SCHMITT, Manfred, 64646 Heppenheim (DE); MANN, Karsten, 70469 Stuttgart (DE); KAEFER, Oliver, 71711 Murr (DE); GERUNDT, Oliver, 72119 Ammerbuch-Reusten (DE)
(74) Vertreter: Gleiss & Grosse
(86) Internationale Anmeldenummer: PCT/DE2003/002921
(87) Internationale Veröffentlichungsnummer: WO 2004/024479

(56) Entgegenhaltungen:
- EP-A- 1 167 713
- DE-A- 10 006 513
- US-A- 4 949 553
- PATENT ABSTRACTS OF JAPAN vol. 2000, no. 21, 3. August 2001 (2001-08-03) & JP 2001 098941 A (TOYOTA MOTOR CORP), 10. April 2001 (2001-04-10)

## Beschreibung

Die vorliegende Erfindung betrifft ein System zur Regulierung des Wärmehaushalts eines Kraftfahrzeuges, mit einem Motorwärme abführenden Wärmekreislauf, der einen Kühlkreis und einen Heizkreis aufweist, die von einem Kühlmittel durchströmt werden können, und mindestens einer Abwärme produzierenden Komponente des Fahrzeugs. Die Erfindung betrifft weiterhin ein Verfahren zur Regulierung des Wärmehaushalts eines Kraftfahrzeuges.

### Stand der Technik

Ein Verbrennungsmotor für ein Kraftfahrzeug weist einen Wärmekreislauf auf, der sich in einen Kühlkreis und einen Heizkreis untergliedern lässt. Der Kühlkreis dient dem Abführen von Motorwärme an die Umgebungsluft, zur Kühlung des Motors, wobei Motorwärme zunächst in dem Kühlkreis an ein darin zirkulierendes Kühlmittel abgegeben wird, das durch eine Kühlmittelpumpe zu einem Kühler des Kühlkreises befördert wird. So wird aufgenommene Wärme an die den Kühler durchströmende Luft abgegeben. Der mit demselben Kühlmittel durchströmte Heizkreis des Wärmekreislaufs des Motors dient der Erwärmung des Fahrzeuginnenraums. Der Heizkreis weist einen Heizungswärmetauscher auf, mit dem Wärme des Kühlmittels an die in den Fahrzeuginnenraum strömende Umgebungsluft abgegeben wird. Beim Betrieb eines Verbrennungsmotors ist es dabei wünschenswert, möglichst schnell hohe Betriebstemperaturen des Motors zu erreichen, um die darin ablaufende Verbrennung zu optimieren. Dadurch lassen sich Schadstoffemissionen reduzieren und Abgasgrenzwerte einhalten. Diesbezüglich ist es zur schnelleren Erwärmung des Motors in der Warmlaufphase bekannt, den Kühler des Kühlkreises mit einer thermostatgeregelten Bypassleitung zu umgehen, so dass das Kühlmittel erst dann durch den Kühler zirkuliert, wenn der Thermostat aufgrund einer erreichten Betriebstemperatur des Motors öffnet. Des Weiteren ist es insbesondere bei kalten Außentemperaturen erwünscht, die Abwärme des Motors schnellstmöglichst zur Aufwärmung des Fahrgastinnenraums nutzen zu können. Da durch eine verminderte Wärmeabgabe des Motors in seiner Warmlaufphase die Heizleistung gering ist, ist es im Stand der Technik bekannt, brennstoff- oder elektrisch betriebene Zuheizer in den Wärmekreislauf zu integrieren, mit denen die in den Fahrzeuginnenraum strömende Luft und/oder das Kühlmittel geheizt wird.

Dokument DE 100 06 513, das als nächstliegender Stand der Technik gesehen wird, offenbart ein solches System zur Regulierung des Wärmehaushalts eines Kraftfahrzeugs.

### Vorteile der Erfindung

Das erfindungsgemäße System zur Regulierung des Wärmehaushalts eines Kraftfahrzeugs baut auf dem gattungsgemäßen Stand der Technik dadurch auf, dass ein System vorgesehen ist, mit der Abwärme von mindestens einer Komponente des Fahrzeugs an den Wärmekreislauf übertragbar ist.

Das System zur Übertragung der Abwärme einer Komponente des Fahrzeugs kann ein System mit einem Gehäuse sein, mit dem eine Umströmung des abwärmeabgebenden Bestandteils der Komponente mit Kühlmittel ermöglicht wird. Die Abwärme der Komponente des Fahrzeugs kann über den Heizkreis oder den Kühlkreis an den Wärmekreislauf übertragen werden. Bei dem erfindungsgemäßen System ist damit eine Wärmequelle einer Komponente des Fahrzeugs in den Wärmekreislauf des Motors eingebunden, wodurch ein schnelleres Aufwärmen des Kühlmittels des Wärmekreislaufs erfolgen kann. Dies führt sowohl zu einer beschleunigten Aufwärmung des Motors, wodurch eine Reduktion des Brennstoffverbrauchs und der Schadstoffemission erzielt wird, als auch zu einem erhöhten Komfort für die Fahrzeuginsassen, da durch die Wärmezufuhr der Komponente des Fahrzeugs und durch die schnellere Erwärmung des Kühlmittels der Fahrzeuginnenraum schneller erwärmt werden kann. Letzteres führt auch zu einem erhöhten Sicherheitsstandard, da bei kalten Außentemperaturen ein schnelleres Enteisen der Fahrzeugscheiben ermöglicht ist. Durch das erfindungsgemäße System ist überdies realisiert, dass die Heizleistung einer vorgesehenen Heizung im Heizkreis des Motors zur Erwärmung des Fahrzeuginnenraums nicht nur vom Betriebszustand des Motorwärmekreislaufs abhängt, sondern umgekehrt vielmehr die besagte Heizleistung zur Erwärmung des Kühlkreises des Motors beiträgt. Diesbezüglich kann auch der im Stand der Technik bekannte Zuheizer oder eine Standheizung für den Heizkreis des Wärmekreislaufs derart genutzt werden, dass neben der Erwärmung der in den Fahrzeuginnenraum geführten Luft auch das Kühlmittel des Wärmekreislaufs erwärmt wird. So ist insbesondere in Warmlaufphasen des Motors ein ausgewogener Wärmehaushalt des Kraftfahrzeugs realisiert. Dabei ist zu betonen, dass mehrere Komponenten des Fahrzeugs vorgesehen sein können, deren Abwärme jeweils an den Wärmekreislauf des Motors übertragen werden kann. Ferner sind zur Realisierung der Wärmeübertragung einer Komponente des Fahrzeugs weitere Systeme vorgesehen, die im Stand der Technik bekannt sind und nicht erörtert werden brauchen. So kann zur Zirkulation des Kühlmittels durch das erfindungsgemäß vorgesehene System beispielsweise eine zusätzliche Kühlmittelpumpe vorgesehen sein. Ferner ist zu betonen, dass allgemein eine Übertragung der Abwärme einer Komponente durch eine Ventil- oder Absperrvorrichtung unterbunden werden kann, wenn beispielsweise der Motor eine ausreichende oder eine bestimmte Betriebstemperatur erreicht hat.

Gemäß Anspruch 2 wird über den Klimaanlagen-Kreisprozess zur Verfügung gestellte Wärme von einem Kältemittel der Klimaanlage durch einen Koppelwärmeübertrager an das Kühlmittel des Wärmekreislaufs des Motors übertragen. Der Wärmeübertrager der Klimaanlage kann dabei an den Kühlkreis oder den Heizkreis des Wärmekreislaufs angekoppelt sein. Je nach Ausführungsart und Steuerung beziehungsweise Regelung des Wärmeübertragers der Klimaanlage können zusätzliche Ventile wie Misch- und Regelventile vorgesehen sein. Diesbezüglich ist es ebenso möglich, den Wärmekreislauf der Klimaanlage durch vorgesehene Klimaanlagen-Komponenten umzukehren, um insbesondere bei tiefen Umgebungstemperaturen die Klimaanlage als Wärmepumpe nutzen zu können, wobei die abgegebene Wärme der Wärmepumpe wiederum in den Wärmekreislaufs des Motors übertragen wird, um das darin zirkulierende Kühlmittel zu erwärmen. Dieser Kreislauf kann somit auch im Stillstand des Motors als ein Standheizungsprozess ausgeführt werden. Durch die Erwärmung des Kühlmittels kann damit vor dem Start des Verbrennungsmotors die Temperatur des Motors erhöht werden, indem das erwärmte Kühlmittel durch den Motor zirkuliert wird. Im Ergebnis heizt sich der Motor schneller auf, womit Emissionen und der Kraftstoffverbrauch von dem Moment des Motorstarts an reduziert sind.

Gemäß einer vorteilhaften Ausführungsform ist nach Anspruch 3 vorgesehen, dass der Wärmeübertrager der Klimaanlage durch eine Bypassleitung umgangen werden kann. Damit ist eine Temperaturregelung an dem Wärmeübertrager möglich, weil der Wärmeeintrag in den Wärmeübertrager über die rückgeführte Wärmemenge des den Wärmeübertrager durchströmenden Mediums variiert werden kann. Die Bypassleitung ist vorzugsweise über mindestens ein geeignetes Ventil angeschlossen, über das sie ganz oder teilweise geöffnet beziehungsweise geschlossen werden kann, so dass die Durchflussmenge einstellbar ist.

Überdies ist es gemäß einer vorteilhaften Ausführungsform nach Anspruch 4 möglich, die zur Erwärmung der in den Fahrgastinnenraum strömenden Umgebungsluft vorgesehene Zuheizvorrichtung zusätzlich zur Erwärmung des Kühlmittels zu nutzen.

Das erfindungsgemäße Verfahren zur Regulierung des Wärmehaushalts eines Kraftfahrzeugs baut auf dem gattungsgemäßen Stand der Technik dadurch auf, dass Abwärme von mindestens einer Komponente des Fahrzeugs an den Wärmekreislauf übertragen wird. Die Erläuterungen in Bezug auf das oben dargelegte erfindungsgemäße System zur Regulierung des Wärmehaushalts eines Kraftfahrzeugs sind dabei in gleicher oder ähnlicher Weise auf das erfindungsgemäße Verfahren zu lesen und die betreffenden Vorteile darauf übertragbar, wobei zur Vermeidung einer Redundanz auf eine wiederholte Erörterung verzichtet wird.

Wesentliche Grundidee der Erfindung ist es damit, diejenigen Komponenten des Fahrzeugs in den Wärmekreislauf des Motors einzubinden, deren Abwärme zur Erwärmung des Kühlmittels genutzt werden kann, um zu einem schnelleren Aufheizen des Innenraums und des Motors beizutragen.

### Zeichnungen

Die Erfindung wird nun unter Bezugnahme auf die beigefügte Zeichnung anhand bevorzugter Ausführungsformen beispielhaft erläutert.

### Dabei zeigt:

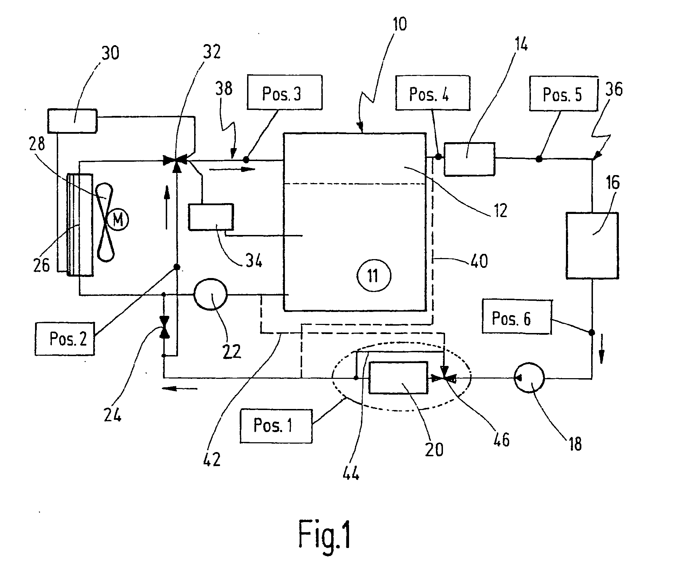

- Figur 1: eine schematische Darstellung eines Wärmekreislaufs eines Kraftfahrzeugs, in den an verschiedenen Positionen ein Wärmeübertrager einer Klimaanlage des Fahrzeugs eingebunden ist, mit dem Abwärme an den Wärmekreislauf übertragbar ist.

### Beschreibung der Ausführungsbeispiele

Gemäß Figur 1 ist ein Wärmekreislauf eines Verbrennungsmotors 10 eines Kraftfahrzeugs aufgezeigt. Der Wärmekreislauf dient zur Regulierung der Betriebstemperatur in einem Motorblock 11 und einem Zylinderkopf 12 des Motors 10 sowie der Regulierung der Fahrzeuginnenraum-Temperatur. Der Wärmekreislauf umfasst einen Kühlkreis 38, der von einem Motorblock 11 des Motors 10 über eine Kühlmittel- beziehungsweise Hauptwasserpumpe 22 und einen Kühler 26 zum Zylinderkopf 12 führt (im Kühlbetrieb ergibt sich eine umgekehrte Pumprichtung). Durch die Hauptwasserpumpe 22 ist eine Zirkulation eines Kühlmittels möglich, um von dem Motor 10 auf das Kühlmittel übertragene Wärme durch den Kühler 26 an die Umgebungsluft abzugeben. Eine bei Stillstand des Fahrzeugs erforderliche Durchströmung des Kühlers mit Luft ist zusätzlich durch ein Kühlergebläse 28 vorgesehen. Zwischen Ventilen 24, 32 ist eine Bypassleitung zur Umgehung des Kühlers angeordnet, womit der Kühlerzweig bei kalten Motortemperaturen abgetrennt werden kann, um Abwärme des Motors im Kühlmittel zu speichern und die Betriebstemperatur des Motors damit schnellstmöglichst zu erhöhen. Der Heizkreis 36 des Wärmekreislaufs führt vom Zylinderkopf 12 des Motors 10 über einen optionalen Abgasrückführungskühler 14 an einen Heizungswärmetauscher 16 und über die Hauptwasserpumpe 22 zurück zum Motor 10. Aufgrund des Anschlusses des Heizkreises 36 an den Kühlkreis 38 ist nur eine einzige Hauptwasserpumpe 22 erforderlich. Wie in Figur 1 jedoch gezeigt, kann alternativ eine zusätzliche Wasserpumpe 18 für den Heizkreis 36 vorgesehen sein. Ferner kann ein Ölwärmetauscher 34 in dem Wärmekreislauf des Motors 10 eingebunden sein. Erfindungsgemäß ist vorgesehen, mindestens eine Komponente des Fahrzeugs in den Wärmekreislauf zu integrieren, so dass die Abwärme der Komponente zur Erwärmung des Kühlmittels des Wärmekreislaufs genutzt werden kann. Gemäß Figur 1 ist in beispielhafter Weise ein Koppelwärmeübertrager 20 einer Klimaanlage des Fahrzeugs in den Wärmekreislauf des Motors 10 eingebunden, mit dem eine Wärmeübertragung der von von der Klimaanlage erzeugten Abwärme in den Wärmekreislauf des Motors vollzogen wird. Für eine optimale Aufheizung des Innenraums kann das Kühlmittel bei geschlossenem Ventil 24 und geöffnetem Ventil 38 zunächst nur durch die Zusatzwasserpumpe 18 direkt in den Zylinderkopf 12 und dann in den Heizkreislauf 36 gepumpt werden. Wie in Figur 1 gezeigt, kann der Wärmeübertrager 20 an verschiedenen Stellen des Wärmekreislaufs integriert sein, d. h. sowohl im Kühlkreis 38 als auch im Heizkreis 36 des Wärmekreislaufs. Position 1 bis Position 6 geben hierzu mögliche Integrationspositionen für den Wärmeübertragers 20 an. Gemäß Position 1 ist der Wärmeübertrager 20 in dem Heizkreis 36 des Motors 10 integriert. Zur Regulierung des Wärmehaushalts des Wärmeübertragers 20 ist eine Bypassleitung 44 um den Wärmeübertrager 20 vorgesehen. Die Zusatz-Wasserpumpe 18 kann dabei auch gemäß Position 6 in Strömungsrichtung hinter dem Wärmeübertrager 20 vorgesehen sein. Aufgrund dieser Anordnung wird durch den Wärmeübertrager 20 in den Heizkreis 36 übertragene Wärme der Klimaanlage zunächst zur Erwärmung des Motors genutzt. Ferner ist es möglich, eine Brückenleitung 40 in dem Heizkreis 36 vorzusehen, mit der Kühlmittel über ein in Störmungsrichtung hinter dem Wärmeübertrager 20 angeordnetes Wärmeübertrager-Mischventil (nicht gezeigt) vom Wärmeübertrager 20 an den Eingang des Abgasrückführungskühlers 14 geleitet werden kann. So kann beispielsweise der Wärmeübertrager 20 ebenfalls mit einer Bypassleitung (nicht gezeigt) in der Brückenleitung 40 vorgesehen sein.

Das Wärmeübertrager-Mischventil kann beispielsweise ein Proportionalventil mit zwei androsselbaren Zweigen sein. Ferner kann eine Kurzschlussleitung 42 von der Hauptwasserpumpe 22 zu dem Eingang des Wärmeübertragers 20 führen, beispielsweise über ein Mischventil. Ist eine Kurzschlussleitung 42 vorgesehen, ist damit eine Temperaturregulierung am Wärmeübertrager möglich, wobei dann der Bypass um den Wärmeübertrager 20 nicht länger notwendig ist. Diese Kurzschlussleitung 42 kann zusätzlich zur Brückenleitung 40 vorgesehen sein. Bei einer Integration des Wärmeübertragers 20 in die Bypassleitung des Kühlkreises 38 zwischen den Ventilen 24 und 32 gemäß Position 2 wird der Wärmeübertrager 20 bei zum Kühler 26 geöffnetem Ventil nicht durchströmt. Es kann jedoch dann davon ausgegangen werden, dass dann das Kühlmittel warm und kein Zuheizen mehr erwünscht ist. Die Wärme kann auch für den Motorwarmlauf genutzt werden, ohne dass der Heizungszweig durchströmt werden muss. Demgegenüber wird bei einer Integration des Wärmeübertragers 20 gemäß Position 3 der Wärmeübertrager 20 immer durchströmt. Gemäß einer Integration des Wärmeübertragers 20 bei Position 4 wird eingebrachte Wärme vorrangig über den Heizungswärmeübertrager 16 in den Innenraum des Fahrzeugs abgegeben. Die Kühlmitteleintrittstemperaturen in den Wärmeübertrager 20 sind an dieser Position im Allgemeinen höher als bei Position 1 bis Position 3 und Position 6, wodurch die die Wärmeübertragung treibende Temperaturdifferenz kleiner ist. Bei einer Integration des Wärmeübertragers 20 gemäß Position 5 ist die Kühlmitteleintrittstemperatur in den Wärmeübertrager 20 gegenüber den Position 1 bis Position 4 und Position 6 höher. Diese Position ermöglicht die direkteste Einkopplung der Wärme über den Heizungswärmeübertrager in den Fahrzeuginnenraum.

Es wird noch darauf hingewiesen, dass die in Figur 1 durch Pfeile veranschaulichten Flussrichtungen für eine eingeschaltete Zusatzkühlmittelpumpe 18 und ein geschlossenes Ventil 24 gelten.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

Beispielsweise kann der in Figur 1 gezeigte einfache Heizungswärmetauscher 16 durch einen zweigeteilten Heizungswärmetauscher ersetzt sein. Dieser kann ebenfalls einen Bypass haben. Ebenso ist es möglich, das Wärmeübertrager-Mischventil in bestimmten Fällen als einfach ausgeführtes Ventil vorzusehen. Ferner ist es möglich, in der Figur gezeigte Bestandteile des Wärmekreislaufs optional vorzusehen, oder diese an anderer Stelle anzuordnen. So kann die Erfindung auch auf einen Wärmekreislauf ohne Abgasrückführungskühler 14 realisiert sein, oder der Ausgleichsbehälter 30 beziehungsweise der Ölwärmetauscher 34 ist an anderer Stelle des Wärmekreislaufs angeschlossen. Ferner kann das Mischventil für den Wärmeübertrager 20 so ausgeführt sein, dass der angeschlossene Zweig ganz geschlossen sein kann und einer der anderen Zweige angedrosselt wird. Darüber hinaus ist es möglich, die Hauptwasserpumpe 22 und/oder die Zusatz-Wasserpumpe 18 elektrisch oder durch einen mechanischen Abtrieb des Verbrennungsmotors anzutreiben und zu regeln beziehungsweise ein- und auszuschalten.

## Patentansprüche

1. System zur Regulierung des Wärmehaushalts eines Kraftfahrzeugs mit
- einem Motorwärme abführenden Wärmekreislauf, der einen Kühlkreis (38) und einen Heizkreis (36) aufweist, die von einem Kühlmittel durchströmt werden können,
- mindestens einer Abwärme produzierenden Komponente (20) des Fahrzeugs, und
- einem System, mit dem beim Warmlauf des Motors (11) Abwärme der mindestens einen Abwärme produzierenden Komponente (20) an das Kühlmittel im Wärmekreislauf übertragbar ist,
- einer Zusatzwasserpumpe (18),
**dadurch gekennzeichnet, dass** die Zusatzwasserpumpe (18) das Kühlmittel beim Warmlauf direkt in einen Zylinderkopf (12) des Motors (11) und dann weiter in den Heizkreis (36) pumpt.

2. System nach Anspruch 1, **dadurch gekennzeichnet, dass** in den Wärmekreislauf nicht der gesamte Motor integriert ist, sondern vorwiegend die Bereiche, in denen Abwärme produziert wird.

3. System nach Anspruch 1 oder 2, **dadurch gekennzeichnet, dass** die Abwärme produzierende Komponente ein Wärmeübertrager (20) einer Klimaanlage ist, dessen Abwärme an den Wärmekreislauf übertragbar ist.

4. System nach einem der vorhergehenden Ansprüche, **dadurch gekennzeichnet, dass** eine Bypassleitung (44) für den Wärmeübertrager (20) vorgesehen ist.

5. System nach einem der vorhergehenden Ansprüche, **dadurch gekennzeichnet, dass** im Heizkreis (36) des Wärmekreislaufs eine Zuheizvorrichtung vorgesehen ist, deren Abwärme an den Wärmekreislauf übertragen werden kann.

6. Verfahren zur Regulierung des Wärmehaushalts eines Kraftfahrzeugs mit
- einem Motorwärme abführenden Wärmekreislauf, der einen Kühlkreis und einen Heizkreis aufweist, die von einem Kühlmittel durchströmt werden können,
- mindestens einer Abwärme produzierenden Komponente des Fahrzeugs,
bei welchem Verfahren beim Warmlauf des Motors (11) Abwärme der mindestens einen Abwärme produzierenden Komponente des Fahrzeugs an das Kühlmittel im Wärmekreislauf übertragen wird, **dadurch gekennzeichnet, dass** das Kühlmittel beim Warmlauf direkt in einen Zylinderkopf (12) des Motors (11) und dann weiter in den Heizkreis (36) gepumpt wird.

7. Verfahren nach Anspruch 6, **dadurch gekennzeichnet, dass** eine Zusatzkühlmittelpumpe (18) vorgesehen ist, die zumindest in einer Betriebsart Kühlmittel direkt in den Zylinderkopf (12) pumpt, insbesondere bei einer nichtaktiven Hauptkühlmittelpumpe (22).

## Claims

1. System for regulating the thermal economy of a motor vehicle, with
- a thermal circuit which dissipates engine heat and which has a cooling circuit (38) and a heating circuit (36) through which a coolant can flow,
- at least one vehicle component (20) producing waste heat, and
- a system, by means of which, when the engine (11) is running hot, waste heat from the at least one component (20) producing waste heat can be transmitted to the coolant in the thermal circuit,
- an additional water pump (18),
**characterized in that**, during hot running, the additional water pump (18) pumps the coolant directly into a cylinder head (12) of the engine (11) and then further on into the heating circuit (36).

2. System according to Claim 1, **characterized in that** the entire engine is not integrated into the thermal circuit, but, predominantly, the regions in which waste heat is produced.

3. System according to Claim 1 or 2, **characterized in that** the component producing waste heat is a heat exchanger (20) of an air-conditioning system, the waste heat from which heat exchanger can be transmitted to the thermal circuit.

4. System according to one of the preceding claims, **characterized in that** a bypass line (44) is provided for the heat exchanger (20).

5. System according to one of the preceding claims, **characterized in that** an additional heating device, the waste heat from which can be transmitted to the thermal circuit, is provided in the heating circuit (36) of the thermal circuit.

6. Method for regulating the thermal economy of a motor vehicle, with
- a thermal circuit which discharges engine heat and which has a cooling circuit and a heating circuit through which a coolant can flow,
- at least one vehicle component producing waste heat,
in which method, when the engine (11) is running hot, waste heat from the at least one vehicle component producing waste heat is transmitted to the coolant in the thermal circuit, **characterized in that**, during hot running, the coolant is pumped directly into a cylinder head (12) of the engine (11) and then further on into the heating circuit (36).

7. Method according to Claim 6, **characterized in that** an additional coolant pump (18) is provided, which, in at least one operating mode, pumps coolant directly into the cylinder head (12), in particular when a main coolant pump (22) is inactive.

## Revendications

1. Système de régulation de l'état thermique d'un véhicule automobile comportant
- un circuit de chaleur pour évacuer la chaleur du moteur, ce circuit se composant d'un circuit de refroidissement (38) et d'un circuit de chauffage (36) traversé par un fluide de refroidissement,
- au moins un composant (20) du véhicule, dégageant de la chaleur et
- un système par lequel lors de la phase de chauffage du moteur (11), la chaleur dégagée par au moins un composant (20) dégageant de la chaleur, est transférée à l'agent de refroidissement du circuit chaud,
- une pompe à eau complémentaire (18),
**caractérisé en ce que**
la pompe à eau complémentaire (18) pompe l'agent de refroidissement lors de la phase de chauffage, directement dans la culasse (12) du moteur (1) puis ensuite dans le circuit de chauffage (36).

2. Système selon la revendication 1,
**caractérisé en ce que**
le circuit de chaleur n'intègre pas l'ensemble du moteur mais de préférence les zones dans lesquelles se dégage de la chaleur.

3. Système selon la revendication 1 ou 2,
**caractérisé en ce que**
le composant dégageant de la chaleur est l'échangeur de chaleur (20) d'une installation de climatisation dont la chaleur dégagée est transmise au circuit de chaleur.

4. Système selon l'une des revendications précédentes,
**caractérisé par**
une conduite de dérivation (44) pour l'échangeur de chaleur (20).

5. Système selon l'une des revendications précédentes,
**caractérisé par**
une installation de chauffage prévue dans le circuit de chauffage (36) du circuit de chaleur, la chaleur dégagée par ce dispositif de chauffage étant transmise au circuit de chaleur.

6. Procédé de régulation de l'état thermique d'un véhicule automobile comportant
- un circuit de chaleur évacuant la chaleur du moteur, ce circuit comprenant un circuit de refroidissement et un circuit de chauffage traversé par un agent de refroidissement,
- au moins un composant dégageant de la chaleur dans le véhicule, procédé selon lequel en phase de chauffage du moteur (11), la chaleur dégagée par au moins un composant dégageant de la chaleur du véhicule est transmise à l'agent de refroidissement du circuit de chaleur,
**caractérisé en ce qu'**
en phase de chauffage, l'agent de refroidissement est directement pompé dans la culasse (12) du moteur (11) puis dans le circuit de chauffage (36).

7. Procédé selon la revendication 6,
**caractérisé par**
une pompe à agent de refroidissement (18), complémentaire, qui, dans au moins un mode de fonctionnement, pompe l'agent de refroidissement directement dans la culasse (12) notamment lorsque la pompe principale d'agent de refroidissement (22) n'est pas activée.
